# EUROPÄISCHE PATENTSCHRIFT

(11) **EP 3 811 104 B1**
(45) Veröffentlichungstag und Bekanntmachung des Hinweises auf die Patenterteilung: **11.06.2025**
(21) Anmeldenummer: 19717892.4
(22) Anmeldetag: 12.04.2019
(51) Int. Cl.: G01S 7/35, G01S 7/292, G01S 13/58, G01S 13/931, G01S 13/34

(54) **AUSWERTEVORRICHTUNG UND VERFAHREN ZUM AUSWERTEN ZUMINDEST EINES RADARSENSORS**
EVALUATION DEVICE AND METHOD FOR EVALUATING AT LEAST ONE RADAR SENSOR
DISPOSITIF D'ÉVALUATION ET PROCÉDÉ D'ÉVALUATION D'AU MOINS UN CAPTEUR RADAR

(30) Priorität: 21.06.2018 DE 102018210083
(43) Veröffentlichungstag der Anmeldung: 28.04.2021
(73) Patentinhaber: Robert Bosch GmbH, 70442 Stuttgart (DE)
(72) Erfinder: SCHOOR, Michael, 70195 Stuttgart (DE); MAYER, Marcel, 89173 Lonsee (DE)
(86) Internationale Anmeldenummer: PCT/EP2019/059578
(87) Internationale Veröffentlichungsnummer: WO 2019/242904

(56) Entgegenhaltungen:
- EP-A1- 3 098 623
- EP-A1- 3 173 812
- DE-A1- 102013 210 256
- DE-A1- 102014 212 281
- DE-A1- 102016 202 112
- DE-A1- 102016 221 947

## Beschreibung

Die Erfindung betrifft eine Auswertevorrichtung für zumindest einen Radarsensor und ein Radargerät. Des Weiteren betrifft die Erfindung ein Verfahren zum Auswerten zumindest eines Radarsensors.

### Stand der Technik

Aus dem Stand der Technik ist die Verwendung von Radarsensoren zur Umgebungsermittlung bekannt. Beispielsweise beschreibt die DE 10 2016 221 947 A1 einen Radarsensor für Kraftfahrzeuge zur Ermittlung der jeweiligen Fahrzeugumgebung. Techniken zum Auswerten der Messsignale eines derartigen Radarsensors sind beispielsweise in der DE 10 2013 210 256 A1, der EP 3 098 623 A1, der DE 10 2014 212 281 A1, der EP 3 173 812 A1 und der DE 10 2016 202 112 A1 beschrieben.

### Offenbarung der Erfindung

Die Erfindung schafft eine Auswertevorrichtung für zumindest einen Radarsensor mit den Merkmalen des Anspruchs 1, ein Radargerät mit den Merkmalen des Anspruchs 3 und ein Verfahren zum Auswerten zumindest eines Radarsensors mit den Merkmalen des Anspruchs 5.

### Vorteile der Erfindung

Die vorliegende Erfindung schafft Möglichkeiten zum Auswerten zumindest eines Radarsensors, dessen Messzyklen jeweils von einer dazwischenliegenden Pausenzeit unterbrochen werden, wobei mittels der vorliegenden Erfindung trotz der Einhaltung der Pausenzeiten "ununterbrochene Beobachtung" einer Umgebung des Radarsensors über mindestens zwei Messzyklen möglich ist. Man kann dies auch damit umschreiben, dass eine "Integrationszeit" beim Auswerten des zumindest einen Radarsensors mittels der vorliegenden Erfindung erhöht ist. Die vorliegende Erfindung bewirkt deshalb eine verbesserte Dopplerauflösung und ein höheres Signal-Rausch-Verhältnis/Signal-Hintergrund-Verhältnis (Signal Noise Ratio, SNR) bei der Auswertung des zumindest einen Radarsensors. Damit ergeben sich auch eine gesteigerte Sensitivität und/oder eine höhere Reichweite bei der Auswertung des zumindest einen Radarsensors mittels der vorliegenden Erfindung. Die hier beschriebenen Vorteile sind mittels der vorliegenden Erfindung realisierbar, ohne dass dazu die Pausenzeiten verkürzt oder ein Auslastungsgrad reduziert werden muss.

In einer vorteilhaften Ausführungsform der Auswertevorrichtung ist die Elektronikeinrichtung dazu ausgelegt, die Fourier-Transformation bezüglich einer Dopplereffekt-relevanten Größe unter Verwendung der aus den Messsignalen aus mindestens zwei verschiedenen Messzyklen abgeleiteten Auswertesignale auszuführen. Wie anhand der weiteren Beschreibung deutlich wird, ermöglicht die hier beschriebene Ausführungsform der Auswertevorrichtung deshalb eine Verbesserung der Dopplertrennfähigkeit bei der Auswertung des zumindest einen Radarsensors.

Die vorausgehend beschriebenen Vorteile sind auch bei einem Radargerät mit einer derartigen Auswertevorrichtung und dem zumindest einen Radarsensor bewirkt. Beispielsweise kann der zumindest eine Radarsensor jeweils ein FMCW-Radarsensor und/oder ein JSFMCW-Radarsensor sein. Damit können auch diese vorteilhaften Sensortypen zum Realisieren der vorliegenden Erfindung eingesetzt werden.

Des Weiteren schafft auch ein Ausführen eines korrespondierenden Verfahrens zum elektronischen Auswerten zumindest eines Radarsensors die oben schon beschriebenen Vorteile. Das Verfahren zum Auswerten zumindest eines Radarsensors kann problemlos so weitergebildet werden, dass die Vorteile der oben erläuterten Ausführungsformen von Auswertevorrichtungen und Radargeräten bewirkt werden.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1c: Funktionsschemata zum Erläutern einer Ausführungsform des Verfahrens zum Auswerten zumindest eines Radarsensors; und
- Fig. 2: eine schematische Darstellung einer Ausführungsform der Auswertevorrichtung, bzw. des damit ausgebildeten Radargeräts.

### Ausführungsformen der Erfindung

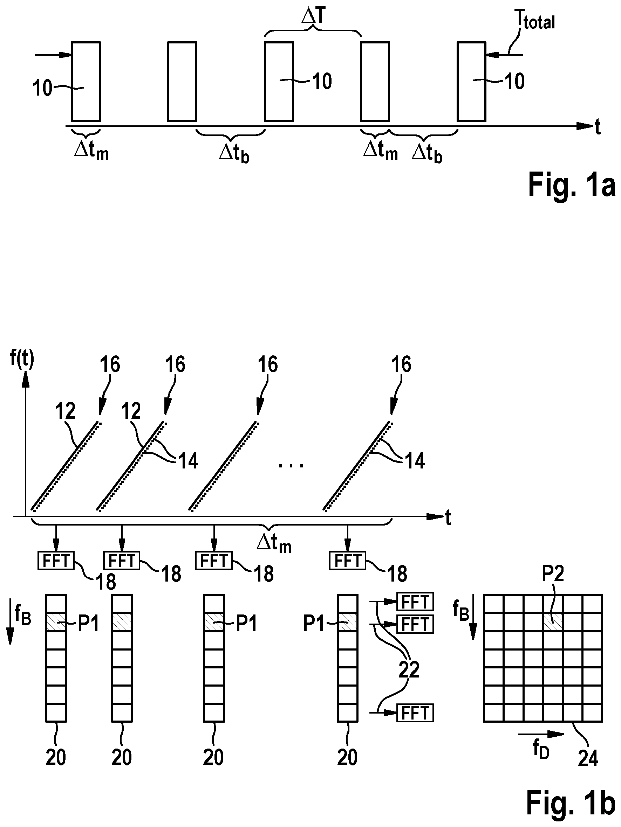

Fig. 1a bis 1c zeigen Funktionsschemata zum Erläutern einer Ausführungsform des Verfahrens zum Auswerten zumindest eines Radarsensors.

Das im Weiteren beschriebene Verfahren kann zum Auswerten einer Vielzahl von Radarsensoren ausgeführt werden. Lediglich beispielhaft wird mittels des im Weiteren beschriebenen Verfahrens nur ein einziger Radarsensor ausgewertet. Vorzugsweise wird der jeweilige Radarsensor zum Ermitteln einer Information bezüglich zumindest einer Teilumgebung des Radarsensors eingesetzt. Der jeweilige Radarsensor kann z.B. Teil eines Überwachungssystems und/oder Teil eines Fahrzeugleitsystems sein.

Bei dem hier beschriebenen Verfahren ist der Radarsensor beispielhaft ein FMCW-Radarsensor (Frequency Modulated Continuous Wave Radar Sensor), insbesondere ein JSFMCW-Radarsensor (Joint Sampling Frequency Modulated Continuous Wave Radar Sensor). Ein derartiger Radarsensor ist hinsichtlich seiner Ressourcen sehr effizient und erlaubt eine gute Auflösung von Mehrdeutigkeiten. Die Vorteile von FMCW-Radarsensoren, bzw. JSFMCW-Radarsensoren, können somit zusammen mit den Vorteilen des nachfolgend beschriebenen Verfahrens genutzt werden. Eine Ausführbarkeit des im Weiteren beschriebenen Verfahrens ist jedoch nicht auf eine Verwendung eines dieser Radarsensortypen beschränkt. Beispielsweise kann der Radarsensor auch ein OFDM-Radarsensor (Orthogonal Frequency-Division Multiplexing Radar Sensor, Orthogonales Frequenzmultiplexverfahren-Radarsensor) oder ein PN-Radarsensor (Pseudo-random Noise Radar Sensor) sein.

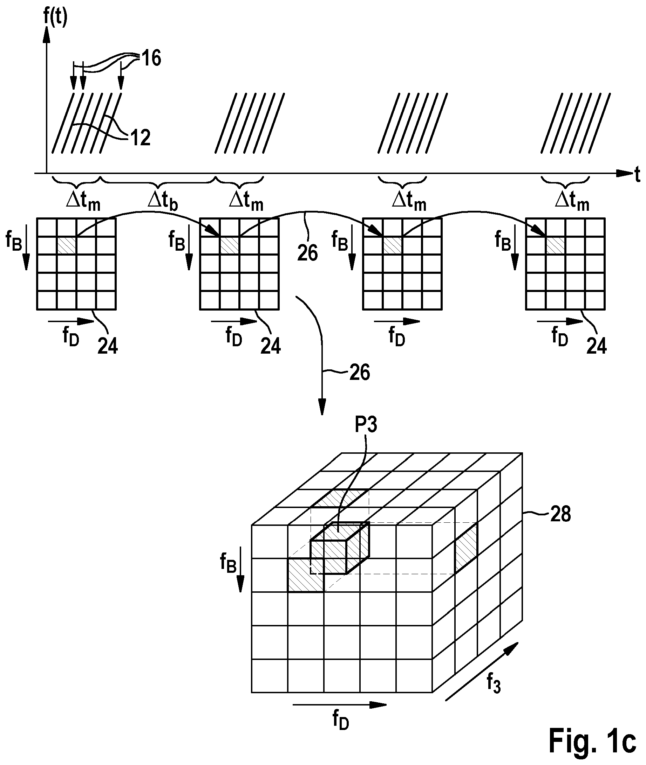

Der Radarsensor sendet während seiner Messzyklen 10 mit jeweils einer Messzykluszeit/Messzyklusdauer Δtₘ Radarsignale 12 aus. Ebenso empfängt der Radarsensor während seiner Messzyklen 10 von seiner Umgebung reflektierte Radarsignale 14 und gibt den empfangenen reflektierten Radarsignalen 14 entsprechende Signale als Messsignale aus. In den Funktionsschema der Fig. 1b und 1c weist das jeweilige Koordinatensystem als Abszisse die Zeitachse t auf, während mittels seiner Ordinate zeitabhängige Frequenzen f(t) der von dem Radarsensor ausgesendeten Radarsignale 12 und der von seiner Umgebung reflektierten Radarsignale 14 wiedergegeben sind.

Der Radarsensor ist zum Ausführen von Chirp-Sequenzmodulationen (Chirp Sequence Modulation) so ausgelegt, dass während eines einzigen Messzyklus 10 mit der Messzykluszeit Δtₘ eine Vielzahl von Chirps 16, vorzugsweise mindestens 100 Chirps 16, ausgeführt werden. Die Messzykluszeit Δtₘ liegt zwischen 1 ms (Millisekunden) bis 40 ms (Millisekunden). Die Messzykluszeit Δtₘ kann beispielsweise 20 ms (Millisekunden) betragen.

Zwischen zwei nachfolgenden Messzyklen 10 bleibt der Radarsensor für eine vorgegebene Pausenzeit/Pausendauer Δt_{b} inaktiv. Vorzugsweise ist die Pausenzeit Δt_{b} so gewählt, dass eine Bauteilerwärmung des Radarsensors durch die zwischen jeweils zwei nachfolgenden Messzyklen 10 eingehaltene Pausenzeit Δt_{b} verhindert ist. Die Pausenzeit Δt_{b} beträgt zwischen 5 ms (Millisekunden) bis 100 ms (Millisekunden). Eine Summe aus der Messzykluszeit Δtₘ und der Pausenzeit Δt_{b} ergibt eine Gesamtzykluszeit/Gesamtzyklusdauer ΔT. Ein Quotient der Messzykluszeit Δtₘ geteilt durch die Gesamtzykluszeit ΔT wird häufig als ein Auslastungsgrad (Duty Cycle) bezeichnet.

Die von dem Radarsensor ausgegebenen Messsignale geben vorzugsweise Frequenzunterschiede zwischen den von dem Radarsensor ausgesendeten Radarsignalen 12 und den von seiner Umgebung reflektierten Radarsignalen 14 wieder. Diese Frequenzunterschiede setzen sich zusammen aus einem abstandsabhängigen Anteil und einem relativgeschwindigkeitsabhängigen/dopplereffektbewirkten Anteil. Der abstandsabhängige Anteil gibt an, in welchem jeweiligen Abstand zu dem Radarsensor sich mindestens ein die ausgesendeten Radarsignale 12 reflektierendes Objekt der Umgebung befindet. Entsprechend gibt der relativgeschwindigkeitsabhängige Anteil an, mit welcher jeweiligen Relativgeschwindigkeit sich das mindestens eine Objekt in Bezug zu dem Radarsensor bewegt.

Mittels des im Weiteren beschriebenen Verfahrens werden die Messsignale des Radarsensors ausgewertet, wobei eine Fourier-Transformation unter Verwendung von aus den Messsignalen aus mindestens zwei verschiedenen Messzyklen 10 abgeleiteten Auswertesignalen ausgeführt wird. Dies wird im Weiteren genauer erläutert:
Bei dem hier beschriebenen Verfahren wird zuerst für jeden Chirp 16 von mindestens zwei verschiedenen Messzyklen 10 je eine Fourier-Transformation 18 bezüglich der Basisbandfrequenz f_{B} ausgeführt. Auf diese Weise werden für jeden Messzyklus 10 der mindestens zwei verschiedenen Messzyklen 10 jeweils eine Vielzahl von Fourier-Reihen 20 festgelegt. Eine Gesamtanzahl der festgelegten Fourier-Reihen 20 pro Messzyklus 10 der mindestens zwei verschiedenen Messzyklen 10 entspricht somit einer Gesamtanzahl der Chirps 16 pro Messzyklus 10.

Man kann die Fourier-Transformationen 18 bezüglich der Basisbandfrequenz f_{B} auch als schnelle Fourier-Transformationen 18 (Fast Fourier-Transformation, FFT) bezeichnen. Die mittels der schnellen Fourier-Transformationen 18 festgelegten Fourier-Reihen 20 weisen alle die gleiche Gesamtanzahl von Bins auf. Die Fourier-Transformationen 18 bezüglich der Basisbandfrequenz f_{B} bewirkt eine "Aufspannung einer ersten Dimension f_{B}" bezüglich des jeweiligen Abstands des mindestens einen reflektierenden Objekts in der Umgebung des Radarsensors. Das mindestens eine reflektierende Objekt in der Umgebung des Radarsensors bewirkt jeweils einen Peak P1 in den festgelegten Fourier-Reihen 20, wobei sich allerdings Peaks P1 von Objekten im gleichen Abstand zu dem Radarsensor trotz ihrer unterschiedlichen Relativgeschwindigkeiten überlagern können.

In einem weiteren in Fig. 1b schematisch wiedergegebenen Verfahrensschritt wird für jeden Messzyklus 10 der mindestens zwei verschiedenen Messzyklen 10 je eine weitere Fourier-Transformation 22 bezüglich einer Dopplerfrequenz f_{D} unter Verwendung der für den jeweiligen Messzyklus 10 festgelegten Vielzahl von Fourier-Reihen 20 ausgeführt. Man kann diese weitere Fourier-Transformation 22 auch als eine Gruppe von je einer Fourier-Transformation 22 für jeden Bin der Vielzahl von Fourier-Reihen 20 des jeweiligen Messzyklus 10 umschreiben. Auf diese Weise wird ein zwei-dimensionaler Fourier-Array 24 für den jeweiligen Messzyklus 10 festgelegt. Das Funktionsschema der Fig. 1b gibt somit eine zweidimensionale schnelle Fourier-Transformation, eine sogenannte 2D-FFT, wieder. Eine erste Dimension f_{B} des auf diese Weise festgelegten zwei-dimensionalen Fourier-Arrays 24 ist der jeweilige Abstand des mindestens einen reflektierenden Objekts in der Umgebung des Radarsensors, während eine zweite Dimension f_{D} des zwei-dimensionalen Fourier-Arrays 24 die jeweils Relativgeschwindigkeit des mindestens einen reflektierenden Objekts in der Umgebung des Radarsensors wiedergibt. Der für jeden Messzyklus 10 festgelegte zwei-dimensionale Fourier-Array 24 kann auch als ein 2D-Spektrum des jeweiligen Messzyklus 10 bezeichnet werden. Das mindestens eine reflektierende Objekt in der Umgebung des Radarsensors bewirkt auch in dem zwei-dimensionalen Fourier-Array 24 jeweils einen Peak P2. Überlagerungen von Peaks P2 in dem zwei-dimensionalen Fourier-Array 24 können mittels des nachfolgend beschriebenen Verfahrensschritts behoben werde:

Das Funktionsschema der Fig. 1c zeigt als weiteren Verfahrensschritt die Fourier-Transformation 26, welche unter Verwendung der von den Messsignalen aus mindestens zwei verschiedenen Messzyklen 10 abgeleiteten zwei-dimensionalen Fourier-Arrays 24 ausgeführt wird. Die Fourier-Transformation 26 wird bezüglich einer Dopplereffekt-relevanten Größe f₃ ausgeführt, wobei vorzugsweise für jeden Bin der zwei-dimensionalen Fourier-Arrays 24 jeweils eine schnelle Fourier-Transformation (FFT) ausgeführt wird. Auf diese Weise erhält man für eine bestimmte Anzahl von ausgewerteten Messzyklen 10 eine drei-dimensionale Fourier-Matrix 28, bzw. eine sogenannte 3D-FFT. Die Fourier-Transformation 26 erweitert damit die zuvor festgelegten zwei-dimensionalen Fourier-Arrays 24 um eine dritte Dimension bezüglich der Dopplereffekt-relevanten Größe f₃. Die Berechnung der dritten Dimension kann für jede mögliche Relativgeschwindigkeit erfolgen. Abhängig von der Dimensionierung der Radarparameter kann es vorteilhaft sein, die sich verändernde Entfernung des Ziels über die Messungen zu berücksichtigen. Vorzugsweise wird die dritte Dimension für jeden Bin der zwei-dimensionalen Fourier-Arrays 24 aufgespannt.

Eine Anzahl von Messzyklen 10, aus deren zwei-dimensionalen Fourier-Arrays 24 die drei-dimensionale Fourier-Matrix 28 festgelegt wird, kann beispielsweise zwischen 2 und 15 liegt. Bevorzugter Weise liegt die Anzahl von zum Festlegen der drei-dimensionalen Fourier-Matrix 28 ausgewerteten Messzyklen 10 zwischen 5 und 10.

Da die Daten zum Erstellen der drei-dimensionalen Fourier-Matrix 28 aus mindestens zwei verschiedenen Messzyklen 10 stammen, ermöglicht die drei-dimensionale Fourier-Matrix 28 eine Beobachtung des mindestens einen reflektierenden Objekts in der Umgebung des Radarsensors über eine sogenannte Integrationszeit Tₜₒₜₐₗ, welche sich vom Beginn des frühesten der mindestens zwei verschiedenen Messzyklen 10 bis zum Ende des letzten der mindestens zwei verschiedenen Messzyklen 10 erstreckt. Die Integrationszeit Tₜₒₜₐₗ ist somit deutlich länger als die Messzykluszeit Δtₘ oder die Gesamtzykluszeit ΔT. Das hier beschriebene Verfahren erlaubt damit eine "ununterbrochene Beobachtung" des mindestens einen reflektierenden Objekts in der Umgebung des Radarsensors für eine Zeitdauer gleich der Integrationszeit Tₜₒₜₐₗ, ohne dass dazu der Radarsensor für die gesamte Integrationszeit Tₜₒₜₐₗ Messungen ausführen muss. Damit kann der Radarsensor während der Integrationszeit Tₜₒₜₐₗ mindestens einmal für die Pausenzeit Δt_{b} inaktiv vorliegen, während trotzdem die drei-dimensionale Fourier-Matrix 28 Informationen über das mindestens eine reflektierende Objekt in der Umgebung des Radarsensors anzeigt, als ob der Radarsensor während der gesamten Integrationszeit Tₜₒₜₐₗ ununterbrochen Messungen ausführen würde. Die Integrationszeit Tₜₒₜₐₗ kann problemlos so lange gewählt werden, dass bei einem ununterbrochenen Messzyklus während einer derartig langen Dauer ein hohes Überhitzungsrisiko des Radarsensors bestünde.

Das hier beschriebene Verfahren erlaubt somit eine "ununterbrochene Beobachtung" des mindestens einen reflektierenden Objekts in der Umgebung des Radarsensors selbst für eine lange Integrationszeit Tₜₒₜₐₗ, ohne dass ein Überhitzen des Radarsensors dazu in Kauf zu nehmen ist. Stattdessen kann mittels der mindestens einen Pausenzeit Δt_{b} während der Integrationszeit Tₜₒₜₐₗ eine gewünschte Temperatur des Radarsensors problemlos eingehalten werden. Gleichzeitig ermöglich die "ununterbrochene Beobachtung" für die relativ lange Integrationszeit Tₜₒₜₐₗ ein gutes Signal-Rausch-Verhältnis (Signal Noise Ratio, SNR) und eine verbesserte Trennfähigkeit der einzelnen Objekte in der Umgebung des Radarsensors gegenüber dem Stand der Technik, und damit eine verlässliche Vermeidung von Mehrdeutigkeiten. Insbesondere durch die sogenannte dritte Dimension bezüglich der Dopplereffekt-relevanten Größe f₃ ist eine verbesserte Trennfähigkeit von mehreren Zielen anhand ihrer Unterschiede in der dritten Dimension, und damit auch eine erhöhte Doppler-Trennfähigkeit, gewährleistet. Das mindestens eine reflektierende Objekt in der Umgebung des Radarsensors bewirkt auch in der drei-dimensionalen Fourier-Matrix 28 jeweils einen Peak P3, wobei eine Überlagerung von Peaks P3 verschiedener Objekte nicht/kaum auftreten kann.

Es wird darauf hingewiesen, dass die vorausgehend beschriebenen Vorteile auch beim Einhalten einer vergleichsweise langen Pausenzeit Δt_{b} zwischen zwei nachfolgenden Messzyklen 10, bzw. bei einem relativ niedrigen Auslastungsgrad (Duty Cycle), gewährleistet sind. Mittels des hier beschriebenen Verfahrens kann deshalb unter Beibehaltung der Pausenzeit Δt_{b} und des Auslastungsgrads die "ununterbrochene Beobachtung" des mindestens einen reflektierenden Objekts in der Umgebung des Radarsensors verlängert werden, wobei gleichzeitig der Radarsensor während der zwischen den Messzyklen 10 eingehaltenen Pausenzeit Δt_{b} sich solange abkühlen kann, dass eine Überhitzung des Radarsensors nicht zu befürchten ist.

Die Festlegung der drei-dimensionalen Fourier-Matrix 28 kann auch mittels einer "gleitenden diskreten Fourier-Transformation" (gleitende DFT) erfolgen. Dazu können nach jedem Messzyklus 10 die Messwerte des "ältesten Messzyklus 10" von einer zuvor festgelegten drei-dimensionalen Fourier-Matrix 28 durch die Messwerte des ,jüngsten Messzyklus 10" ersetzt werden, evtl. unter Verwendung eines Phasenterms zur Korrektur. Auf diese Weise kann eine Rechenzeit zur Festlegung der drei-dimensionalen Fourier-Matrix 28 signifikant reduziert werden. Um einen Rechenaufwand zu verringern, kann die dritte Dimension der drei-dimensionalen Fourier-Matrix 28 auch nur für besonders relevant angesehene Relativgeschwindigkeiten bestimmt werden.

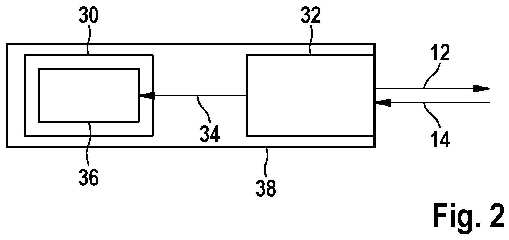

Fig. 2 zeigt eine schematische Darstellung einer Ausführungsform der Auswertevorrichtung, bzw. des damit ausgebildeten Radargeräts.

Die in Fig. 2 schematisch dargestellte Auswertevorrichtung 30 ist zum Zusammenwirken mit zumindest einem Radarsensor 32 ausgebildet. Der jeweilige Radarsensor 32 ist dazu ausgelegt, während seiner Messzyklen Radarsignale 12 auszusenden und von einer (nicht wiedergegebenen) Umgebung des Radarsensors 32 reflektierte Radarsignale 14 zu empfangen und den empfangenen reflektierten Radarsignalen entsprechende Messsignale 34 auszugeben, während der Radarsensor 32 zwischen zwei nachfolgenden Messzyklen für eine vorgegebene Pausenzeit inaktiv bleibt. Der zumindest eine mit der Auswertevorrichtung 30 zusammenwirkende Radarsensor 32 kann z.B. ein FMCW-Radarsensor (Frequency Modulated Continuous Wave Radar Sensor), ein JSFMCW-Radarsensor (Joint Sampling Frequency Modulated Continuous Wave Radar Sensor), ein OFDM-Radarsensor (Orthogonal Frequency-Division Multiplexing Radar Sensor, Orthogonales Frequenzmultiplexverfahren-Radarsensor) und/oder ein PN-Radarsensor (Pseudo-random Noise Radar Sensor) sein. Eine Einsetzbarkeit der Auswertevorrichtung 30 ist jedoch nicht auf diese Radarsensortypen beschränkt.

Die Auswertevorrichtung 30 hat eine Elektronikeinrichtung 36, welche dazu ausgelegt ist, Messsignale 34 des Radarsensors 32 auszuwerten. Vor allem ist die Elektronikeinrichtung 36 dazu ausgelegt, eine Fourier-Transformation unter Verwendung von Messsignalen 34 aus mindestens zwei verschiedenen Messzyklen und/oder unter Verwendung von aus den Messsignalen 34 aus mindestens zwei verschiedenen Messzyklen abgeleiteten Auswertesignalen auszuführen. Vorzugsweise ist die Elektronikeinrichtung 36 dazu ausgelegt, diese Fourier-Transformation bezüglich einer Dopplereffekt-relevanten Größe auszuführen.

Wie aus der vorausgehenden Beschreibung deutlich wird, kann die Elektronikeinrichtung 36 insbesondere dazu ausgelegt sein, für jeden Chirp der mindestens zwei verschiedenen Messzyklen je eine Fourier-Transformation bezüglich einer Basisbandfrequenz auszuführen und auf diese Weise jeweils eine Vielzahl von Fourier-Reihen für jeden Messzyklus der mindestens zwei verschiedenen Messzyklen festzulegen. Anschließend kann die Elektronikeinrichtung 36 für jeden Messzyklus der mindestens zwei verschiedenen Messzyklen je eine weitere Fourier-Transformation bezüglich einer Dopplerfrequenz unter Verwendung der für den jeweiligen Messzyklus festgelegten Vielzahl von Fourier-Reihen auszuführen und auf diese Weise je einen 2-dimensionalen Fourier-Array für den jeweiligen Messzyklus festzulegen. Die unter Verwendung der von den Messsignalen 34 aus mindestens zwei verschiedenen Messzyklen abgeleiteten Auswertesignale ausgeführte Fourier-Transformation wird dann unter Verwendung der 2-dimensionalen Fourier-Arrays der mindestens zwei verschiedenen Messzyklen ausgeführt. Speziell das oben beschriebene Verfahren kann mittels der Elektronikeinrichtung 36 ausführbar sein.

In der Ausführungsform der Fig. 2 ist die Auswertevorrichtung 30 Teil eines mit dem zumindest einen Radarsensor 32 ausgebildeten Radargerät 38. Die Auswertevorrichtung 30 kann jedoch auch (als "eigenes Gerät") mit mindestens einem getrennt dazu ausgebildeten Radarsensor zusammenwirken.

## Patentansprüche

1. Auswertevorrichtung (30) für zumindest einen Radarsensor (32), wobei der Radarsensor (32) dazu ausgelegt ist, während seiner Messzyklen (10) Radarsignale (12) auszusenden durch Aussendung einer Vielzahl von Chirps (16) während jedes einzelnen Messzyklus (10) mit einer Messzykluszeit (Δtₘ) zwischen 1 Millisekunde bis 40 Millisekunden und von einer Umgebung des Radarsensors (32) reflektierte Radarsignale (14) zu empfangen und den empfangenen reflektierten Radarsignalen (14) entsprechende Signale als Messsignale (34) auszugeben, während der Radarsensor (32) zwischen zwei nachfolgenden Messzyklen (10) für eine vorgegebene Pausenzeit (Δt_{b}) inaktiv bleibt, mit:
einer Elektronikeinrichtung (36), welche dazu ausgelegt ist, Messsignale (34) des Radarsensors (32) auszuwerten;
**dadurch gekennzeichnet, dass**
die Elektronikeinrichtung (36) dazu ausgelegt ist,
- für jeden Chirp (16) von mindestens zwei verschiedenen Messzyklen (10) mit der Pausenzeit (Δt_{b}) zwischen 5 Millisekunden bis 100 Millisekunden zwischen jeweils zwei nachfolgenden der mindestens zwei Messzyklen (10) je eine erste Fourier-Transformation (18) bezüglich einer Basisbandfrequenz (f_{B}) auszuführen und auf diese Weise jeweils eine Vielzahl von Fourier-Reihen (20) für jeden Messzyklus (10) der mindestens zwei verschiedenen Messzyklen (10) festzulegen,
- für jeden Messzyklus (10) der mindestens zwei verschiedenen Messzyklen (10) mit der Pausenzeit (Δt_{b}) zwischen 5 Millisekunden bis 100 Millisekunden zwischen jeweils zwei nachfolgenden der mindestens zwei Messzyklen (10) je eine weitere, zweite Fourier-Transformation (22) bezüglich einer Dopplerfrequenz (f_{D}) unter Verwendung der für den jeweiligen Messzyklus (10) festgelegten Vielzahl von Fourier-Reihen (20) auszuführen und auf diese Weise je einen 2-dimensionalen Fourier-Array (24) für den jeweiligen Messzyklus (10) festzulegen, und
- eine weitere, dritte Fourier-Transformation (26) unter Verwendung von aus den Messsignalen (34) aus den mindestens zwei verschiedenen Messzyklen (10) mit der Pausenzeit (Δt_{b}) zwischen 5 Millisekunden bis 100 Millisekunden zwischen jeweils zwei nachfolgenden der mindestens zwei Messzyklen (10) abgeleiteten Auswertesignalen (24) auszuführen, wobei die abgeleiteten Auswertesignale (24) die 2-dimensionalen Fourier-Arrays (24) der mindestens zwei verschiedenen Messzyklen (10) sind.

2. Auswertevorrichtung (30) nach Anspruch 1, wobei die Elektronikeinrichtung (36) dazu ausgelegt ist, die dritte Fourier-Transformation (26) bezüglich einer Dopplereffekt-relevanten Größe (f₃) unter Verwendung der aus den Messsignalen (34) aus den mindestens zwei verschiedenen Messzyklen (10) mit der Pausenzeit (Δt_{b}) zwischen 5 Millisekunden bis 100 Millisekunden zwischen jeweils zwei nachfolgenden der mindestens zwei Messzyklen (10) abgeleiteten Auswertesignale (24) auszuführen.

3. Radargerät (38) mit:
einer Auswertevorrichtung (30) nach einem der vorhergehenden Ansprüche; und dem zumindest einen Radarsensor (32).

4. Radargerät (38) nach Anspruch 3, wobei der zumindest eine Radarsensor (32) jeweils ein FMCW-Radarsensor und/oder ein JSFMCW-Radarsensor ist.

5. Verfahren zum elektronischen
Auswerten zumindest eines Radarsensors (32), welcher während seiner Messzyklen (10) Radarsignale (12) aussendet durch Aussenden einer Vielzahl von Chirps (16) während jedes einzelnen Messzyklus (10) mit einer Messzykluszeit (Δtₘ) zwischen 1 Millisekunde bis 40 Millisekunden und von einer Umgebung des Radarsensors (32) reflektierte Radarsignale (14) empfängt und den empfangenen reflektierten Radarsignalen (14) entsprechende Signale als Messsignale (34) ausgibt, jedoch zwischen zwei nachfolgenden Messzyklen (10) für eine vorgegebene Pausenzeit (Δt_{b}) inaktiv bleibt,
wobei Messsignale (34) des Radarsensors (32) ausgewertet werden;
**dadurch gekennzeichnet, dass**
für jeden Chirp (16) von mindestens zwei verschiedenen Messzyklen (10) mit der Pausenzeit (Δt_{b}) zwischen 5 Millisekunden bis 100 Millisekunden zwischen jeweils zwei nachfolgenden der mindestens zwei Messzyklen (10) je eine erste Fourier-Transformation (18) bezüglich einer Basisbandfrequenz (f_{B}) ausgeführt und auf diese Weise jeweils eine Vielzahl von Fourier-Reihen (20) für jeden Messzyklus (10) der mindestens zwei verschiedenen Messzyklen (10) festgelegt wird,
für jeden Messzyklus (10) der mindestens zwei verschiedenen Messzyklen (10) mit der Pausenzeit (Δt_{b}) zwischen 5 Millisekunden bis 100 Millisekunden zwischen jeweils zwei nachfolgenden der mindestens zwei Messzyklen (10) je eine weitere, zweite Fourier-Transformation (22) bezüglich einer Dopplerfrequenz (f_{D}) unter Verwendung der für den jeweiligen Messzyklus (10) festgelegten Vielzahl von Fourier-Reihen (20) ausgeführt und auf diese Weise je ein 2-dimensionaler Fourier-Array (24) für den jeweiligen Messzyklus (10) festgelegt wird, und
eine weitere, dritte Fourier-Transformation (26) unter Verwendung von aus den Messsignalen (34) aus den mindestens zwei verschiedenen Messzyklen (10) mit der Pausenzeit (Δt_{b}) zwischen 5 Millisekunden bis 100 Millisekunden zwischen jeweils zwei nachfolgenden der mindestens zwei Messzyklen (10) abgeleiteten Auswertesignalen (24) ausgeführt wird, wobei als abgeleitete Auswertesignale (24) die 2-dimensionalen Fourier-Arrays (24) der mindestens zwei verschiedenen Messzyklen (10) verwendet werden.

6. Verfahren nach Anspruch 5, wobei die dritte Fourier-Transformation (26) bezüglich einer Dopplereffekt-relevanten Größe (f₃) unter Verwendung der aus den Messsignalen (34) aus den mindestens zwei verschiedenen Messzyklen (10) mit der Pausenzeit (Δt_{b}) zwischen 5 Millisekunden bis 100 Millisekunden zwischen jeweils zwei nachfolgenden der mindestens zwei Messzyklen (10) abgeleiteten Auswertesignale (24) ausgeführt wird.

## Claims

1. Evaluation device (30) for at least one radar sensor (32), wherein the radar sensor (32) is designed, during its measurement cycles (10), to emit radar signals (12) by emitting a plurality of chirps (16) during each individual measurement cycle (10) with a measurement cycle time (Δtₘ) of between 1 millisecond and 40 milliseconds and to receive radar signals (14) reflected from an environment of the radar sensor (32) and to output signals corresponding to the received reflected radar signals (14) as measurement signals (34), while the radar sensor (32) remains inactive between two subsequent measurement cycles (10) for a predefined pause time (Δt_{b}), comprising:
an electronic unit (36) designed to evaluate measurement signals (34) of the radar sensor (32);
**characterized in that**
the electronic unit (36) is designed:
- for each chirp (16) of at least two different measurement cycles (10) with the pause time (Δt_{b}) of between 5 milliseconds and 100 milliseconds between each two subsequent measurement cycles from the at least two measurement cycles (10), to carry out a respective first Fourier transformation (18) with respect to a baseband frequency (f_{B}) and in this way to define in each case a plurality of Fourier series (20) for each measurement cycle (10) of the at least two different measurement cycles (10),
- for each measurement cycle (10) of the at least two different measurement cycles (10) with the pause time (Δt_{b}) of between 5 milliseconds and 100 milliseconds between each two subsequent measurement cycles from the at least two measurement cycles (10), to carry out a respective further, second Fourier transformation (22) with respect to a Doppler frequency (f_{D}) using the plurality of Fourier series (20) defined for the respective measurement cycle (10), and in this way to define a respective 2-dimensional Fourier array (24) for the respective measurement cycle (10), and
- to carry out a further, third Fourier transformation (26) using evaluation signals (24) derived from the measurement signals (34) from the at least two different measurement cycles (10) with the pause time (Δt_{b}) of between 5 milliseconds and 100 milliseconds between each two subsequent measurement cycles from the at least two measurement cycles (10), wherein the derived evaluation signals (24) are the 2-dimensional Fourier arrays (24) of the at least two different measurement cycles (10).

2. Evaluation device (30) according to Claim 1, wherein the electronic unit (36) is designed to carry out the third Fourier transformation (26) with respect to a Doppler effect-relevant variable (f₃) using the evaluation signals (24) derived from the measurement signals (34) from the at least two different measurement cycles (10) with the pause time (Δt_{b}) of between 5 milliseconds and 100 milliseconds between each two subsequent measurement cycles from the at least two measurement cycles (10).

3. Radar instrument (38) comprising:
an evaluation device (30) according to either of the preceding claims; and the at least one radar sensor (32).

4. Radar instrument (38) according to Claim 3, wherein the at least one radar sensor (32) is in each case an FMCW radar sensor and/or a JSFMCW radar sensor.

5. Method for the electronic evaluation of at least one radar sensor (32) which, during its measurement cycles (10), emits radar signals (12) by emitting a plurality of chirps (16) during each individual measurement cycle (10) with a measurement cycle time (Δtₘ) of between 1 millisecond and 40 milliseconds and receives radar signals (14) reflected from an environment of the radar sensor (32) and outputs signals corresponding to the received reflected radar signals (14) as measurement signals (34), but remains inactive between two subsequent measurement cycles (10) for a predefined pause time (Δt_{b}),
wherein measurement signals (34) of the radar sensor (32) are evaluated;
**characterized in that**
for each chirp (16) of at least two different measurement cycles (10) with the pause time (Δt_{b}) of between 5 milliseconds and 100 milliseconds between each two subsequent measurement cycles from the at least two measurement cycles (10), a respective first Fourier transformation (18) with respect to a baseband frequency (f_{B}) is carried out and in this way in each case a plurality of Fourier series (20) are defined for each measurement cycle (10) of the at least two different measurement cycles (10),
for each measurement cycle (10) of the at least two different measurement cycles (10) with the pause time (Δt_{b}) of between 5 milliseconds and 100 milliseconds between each two subsequent measurement cycles from the at least two measurement cycles (10), a respective further, second Fourier transformation (22) with respect to a Doppler frequency (f_{D}) is carried out using the plurality of Fourier series (20) defined for the respective measurement cycle (10), and in this way a respective 2-dimensional Fourier array (24) is defined for the respective measurement cycle (10), and
a further, third Fourier transformation (26) is carried out using evaluation signals (24) derived from the measurement signals (34) from the at least two different measurement cycles (10) with the pause time (Δt_{b}) of between 5 milliseconds and 100 milliseconds between each two subsequent measurement cycles from the at least two measurement cycles (10), wherein the 2-dimensional Fourier arrays (24) of the at least two different measurement cycles (10) are used as derived evaluation signals (24) .

6. Method according to Claim 5, wherein the third Fourier transformation (26) is carried out with respect to a Doppler effect-relevant variable (f₃) using the evaluation signals (24) derived from the measurement signals (34) from the at least two different measurement cycles (10) with the pause time (Δt_{b}) of between 5 milliseconds and 100 milliseconds between each two subsequent measurement cycles from the at least two measurement cycles (10).

## Revendications

1. Dispositif d'évaluation (30) pour au moins un capteur radar (32), le capteur radar (32) étant conçu de façon à émettre des signaux radar (12) pendant ses cycles de mesure (10), en émettant une pluralité de chirps (16) pendant chaque cycle de mesure individuel (10) avec un temps de cycle de mesure (Δtₘ) compris entre 1 milliseconde et 40 millisecondes, et à recevoir des signaux radar (14) réfléchis par l'environnement du capteur radar (32), et à émettre des signaux correspondant aux signaux radar réfléchis reçus (14) en tant que signaux de mesure (34), pendant que le capteur radar (32) reste inactif entre deux cycles de mesure (10) consécutifs pour un temps de pause (Δt_{b}) prédéfini, comprenant :
un dispositif électronique (36) qui est conçu pour évaluer les signaux de mesure (34) du capteur radar (32) ;
**caractérisé en ce que**
le dispositif électronique (36) est conçu de façon à,
- pour chaque chirp (16) d'au moins deux cycles de mesure (10) différents avec un temps de pause (Δt_{b}) compris entre 5 et 100 millisecondes entre deux cycles de mesure (10) consécutifs parmi les au moins deux cycles de mesure (10), effectuer une première transformation de Fourier (18) par rapport à une fréquence de bande de base (f_{B}) et déterminer ainsi une pluralité de séries de Fourier (20) pour chaque cycle de mesure (10) desdits au moins deux cycles de mesure différents (10),
- pour chaque cycle de mesure (10) desdits au moins deux cycles de mesure différents (10) avec un temps de pause (Δt_{b}) compris entre 5 et 100 millisecondes entre deux cycles consécutifs desdits au moins deux cycles de mesure (10), effectuer une deuxième transformation de Fourier supplémentaire (22) par rapport à une fréquence Doppler (f_{D}) en utilisant la pluralité de séries de Fourier (20) définie pour le cycle de mesure respectif (10), et déterminer ainsi un réseau de Fourier bidimensionnel (24) pour le cycle de mesure respectif (10), et
- effectuer une troisième transformation de Fourier (26) supplémentaire en utilisant des signaux d'évaluation (24) dérivés des signaux de mesure (34) desdits au moins deux cycles de mesure différents (10) avec le temps de pause (Δt_{b}) compris entre 5 millisecondes et 100 millisecondes entre deux cycles consécutifs desdits au moins deux cycles de mesure (10), les signaux d'évaluation dérivés (24) étant les réseaux de Fourier bidimensionnels (24) desdits au moins deux cycles de mesure différents (10).

2. Dispositif d'évaluation (30) selon la revendication 1, dans lequel le dispositif électronique (36) est conçu de façon à effectuer la troisième transformation de Fourier (26) par rapport à une grandeur pertinente pour l'effet Doppler (f₃) en utilisant les signaux d'évaluation (24) dérivés des signaux de mesure (34) desdits au moins deux cycles de mesure différents (10) avec le temps de pause (Δt_{b}) compris entre 5 millisecondes et 100 millisecondes entre chacun des deux cycles de mesure consécutifs desdits au moins deux cycles de mesure (10).

3. Appareil radar (38) comprenant :
un dispositif d'évaluation (30) selon l'une des revendications précédentes ; et au moins un capteur radar (32).

4. Appareil radar (38) selon la revendication 3, dans lequel ledit au moins un capteur radar (32) est à chaque fois un capteur radar FMCW et/ou un capteur radar JSFMCW.

5. Procédé d'évaluation électronique d'au moins un capteur radar (32), qui émet des signaux radar (12) pendant ses cycles de mesure (10), qui reçoit des signaux radar (14) réfléchis par l'environnement du capteur radar (32) en émettant une pluralité de chirps (16) pendant chaque cycle de mesure individuel (10) avec un temps de cycle de mesure (Δtₘ) compris entre 1 milliseconde et 40 millisecondes, et qui émet des signaux correspondant aux signaux radar réfléchis reçus des signaux de radar (14) réfléchis correspondants en tant que signaux de mesure (34), mais qui reste inactif entre deux cycles de mesure (10) consécutifs pendant un temps de pause (Δt_{b}) prédéfini,
les signaux de mesure (34) du capteur radar (32) étant évalués ;
**caractérisé en ce que**
pour chaque chirp (16) d'au moins deux cycles de mesure différents (10) avec un temps de pause (Δt_{b}) compris entre 5 et 100 millisecondes entre deux cycles consécutifs desdits au moins deux cycles de mesure (10), une première transformation de Fourier (18) est effectuée par rapport à une fréquence de bande de base (f_{B}) et, de cette manière, un grand nombre de séries de Fourier (20) est déterminé pour chaque cycle de mesure (10) desdits au moins deux cycles de mesure différents (10),
pour chaque cycle de mesure (10) desdits au moins deux cycles de mesure différents (10) avec le temps de pause (Δt_{b}) compris entre 5 millisecondes et 100 millisecondes entre deux cycles consécutifs desdits au moins deux cycles de mesure (10), une deuxième transformation de Fourier supplémentaire (22) par rapport à une fréquence Doppler (f_{D}) est effectuée en utilisant la pluralité de séries de Fourier (20) définie pour le cycle de mesure respectif (10) et, de cette manière, un réseau de Fourier bidimensionnel (24) est déterminé pour le cycle de mesure respectif (10), et
une troisième transformation de Fourier supplémentaire (26) est effectuée en utilisant des signaux d'évaluation (24) dérivés des signaux de mesure (34) desdits au moins deux cycles de mesure différents (10) avec le temps de pause (Δt_{b}) compris entre 5 millisecondes et 100 millisecondes entre deux cycles consécutifs desdits au moins deux cycles de mesure (10), les réseaux de Fourier bidimensionnels (24) desdits au moins deux cycles de mesure différents (10) étant utilisés en tant que signaux d'évaluation dérivés (24).

6. Procédé selon la revendication 5, dans lequel la troisième transformation de Fourier (26) est effectuée par rapport à une grandeur (f₃) pertinente pour l'effet Doppler en utilisant les signaux d'évaluation (24) dérivés des signaux de mesure (34) desdits au moins deux cycles de mesure différents (10) avec le temps de pause (Δt_{b}) compris entre 5 millisecondes et 100 millisecondes entre chacun des deux cycles de mesure (10) consécutifs parmi lesdits au moins deux cycles de mesure (10).
